# EUROPEAN PATENT SPECIFICATION

(11) **EP 2 567 620 B1**
(45) Date of publication and mention of the grant of the patent: **26.11.2014**
(21) Application number: 11777316.8
(22) Date of filing: 06.05.2011
(51) Int. Cl.: A22C 29/04, A01K 61/00

(54) **CONTAINER FOR THE DEPURATION OF MOLLUSCS**
BEHÄLTER ZUR REINIGUNG VON MOLLUSKEN
CONTENANT POUR LE NETTOYAGE DE MOLLUSQUES

(30) Priority: 07.05.2010 ES 201030438 U
(43) Date of publication of application: 13.03.2013
(73) Proprietor: Rotogal, S.L., 15930 Boiro - A Coruña (ES)
(72) Inventor: PARDO VICENTE, Miguel Angel, E-15930 Boiro - A Coruña (ES); FAJARDO LOPEZ, Jorge, E-15930 Boiro - A Coruña (ES)
(74) Representative: Carvajal y Urquijo, Isabel
(86) International application number: PCT/ES2011/070329
(87) International publication number: WO 2011/138493

(56) References cited:
- EP-A1- 0 285 457
- EP-A1- 1 474 972
- EP-A1- 1 474 972
- EP-A2- 1 120 038
- EP-A2- 1 120 038
- WO-A1-2004/021774
- ES-A1- 2 187 326
- ES-A1- 2 187 326
- ES-U- 1 050 257

## Description

### Object of the Invention

The present invention relates to a container for the depuration of mollusks, especially designed for optimizing the mollusk depuration process and the subsequent work of cleaning the containers used in said process.

### Background of the Invention

The state of the art contemplates the use of containers for the depuration of mollusks, of the type of containers which are configured to be stacked forming a column, into the upper part of which the depuration water is poured like a shower. Each of these containers comprises a support base on which there is configured a body defining a receptacle provided for housing the mollusks. The depuration water starts a downward circulation, passing in a staggered manner from the upper container into the receptacle of the container immediately underneath same until reaching a sink or any other type of drainage.

Document ES1050257U contemplates a container with these features, where the means allowing the evacuation of the depuration water from one container to another consist of a hollow cavity which is arranged inside at least one of the side walls defining the receptacle. This cavity takes the water from the receptacle through one or more inlet openings located in the upper part and the lower part of the container and transfers it through one or more outlet openings located in the base thereof. The main drawback of this container is the lack of a forced circulation of the depuration water which results in two important consequences that significantly reduce the efficiency of depuration process. Firstly, clean water that does not contact the mollusks is evacuated, and secondly, the water becomes stagnant thus reducing the optimum oxygen levels for depuration.

Document ES2187326A1 partly improves some of these drawbacks by means of using a container having at least two syphonic evacuation lines arranged in opposing walls. These lines collect the water from the bottom of the container and transfer it into the receptacle of the container immediately underneath, forcing a circulation which reduces to a certain extent the stagnation thereof and the evacuation of clean water. In turn, water is discharged into the lower container by means of a deflective oblique sheet located at the lower end of the line. This sheet drives the water in a direction perpendicular to the wall of the receptacle where said line is located. Despite the mentioned improvements, this container also has significant drawbacks which significantly reduce the efficiency of depuration process. The most outstanding of them is the lack of a turbulent enough flow of water for the proper operation of the process. Specifically, although said perpendicular driving pulses occur in each of the side walls of the container, they end up leaving backwash water in the corners. The consequences are again the existence of a certain stagnation of depuration water, and particularly the lack of a circulation maximizing the contact of the depuration water with the mollusks.

The present invention solves the aforementioned drawbacks by means of a container according to claim 1 especially designed for optimizing the depuration process, as a result of the fact that it allows assuring the ideal turbulent flow of depuration water and a circulation thereof which maximizes the contact with the mollusks to be depurated. All this allows reducing depuration water consumption and process time.

The present invention further has constant emptying means and intermittent emptying means which also offer several advantages. The first means allow the continuous and regulated evacuation of depuration water from one container to another whereby the time of contact of the water of the receptacle with the mollusks is regulated and makes the depuration process even more efficient. The second means in turn facilitate the work of cleaning the containers.

### Description of the Invention

To solve the aforementioned drawbacks, the container for the depuration of mollusks of the present invention is of the type of containers which are configured to be stacked forming a column of containers into the upper part of which depuration water is poured like a shower. Each container comprises a base, a body defining a receptacle provided for housing the mollusks and evacuation means configured for allowing the forced circulation of the depuration water from the bottom of the container into the receptacle of the container immediately underneath.

In turn, the evacuation means of the container comprise at least two circulation lines which are arranged in respective opposing corners of the container, wherein each of the circulation lines comprises:. a first section with a collecting opening arranged at the bottom of the container;. a second section communicating with the first section, allowing a circulation of depuration water following an inverted U trajectory between both sections; and a third section communicating with the second section, wherein said third section is integrated in the base of the container and has a discharging opening therein.

Wherein the third section and the discharging opening of each of the opposing circulation lines are formed and oriented such that they allow a turbulent flow of the depuration water and a circulation thereof throughout the receptacle, therefore allowing the reduction of depuration water consumption and process time.

Likewise, the upper part of the first section and of the second section opens to the outside by means of a cavity which allows ventilating the circulation line and the cleaning thereof. This ventilation is also assured when the containers are stacked since the base of the container is configured for partially covering the cavity of the container immediately underneath. This also allows the depuration water to overflow the cavity to go into the container immediately underneath, provided that the level of the container reaches the limit values caused by an excessive flow rate.

As mentioned above, the third section and the discharging opening of each of the opposing circulation lines are formed and oriented such that they allow a turbulent flow of the depuration water and a circulation thereof throughout the receptacle. The way to achieve these results is by forming and orienting the third section and the discharging opening such that they have trajectories and shapes which allow the fast rotational movement of the depuration water in the receptacle. In the same sense, the discharging openings of each of the opposing circulation lines are arranged on an inner vertical surface of the base forming an elliptical contour on said vertical surface which allows driving the depuration water obliquely. A circulation effect is thus produced on the driven water favoring its circulation throughout the receptacle, preventing the appearance of areas with backwash water which are common when the water is driven perpendicular to the walls of the body of the container.

The container for the depuration of mollusks of the present invention additionally comprises a grating close to the bottom of the container configured for holding the mollusks to be depurated. Said grating is arranged on a plurality of pins between which the sediments from the depuration are deposited. Each of the pins comprises an embedded nut configured for receiving a screw for fixing the grating to the pin. The configuration described allows turning over the containers to discharge the depurated product without dropping the depuration sludge or waste since they are secured by the grating. Furthermore, these pins greatly facilitate the cleaning of the container since they facilitate the free circulation of the cleaning water through same; unlike what happens in the container of document ES2187326A1, for example, where the grating is secured by a cross grid preventing the circulation of the cleaning water.

The container for the depuration of mollusks of the present invention additionally comprises constant emptying means allowing the continuous and regulated evacuation of the depuration water from the bottom of the container into the receptacle of the container immediately underneath. The constant emptying means comprise an aperture arranged at the bottom of the container, configured for housing a sealing gasket which in turn has a hole the larger or smaller diameter of which allows regulating the flow of depuration water passing through same.

The container for the depuration of mollusks of the present invention additionally comprises intermittent emptying means allowing the evacuation of the depuration water from inside the receptacle to the outside thereof. The intermittent emptying means comprise one or more side openings configured for receiving leak-tight closure stoppers. Each of the side openings preferably comprises a mouth formed at the bottom of the receptacle for channeling the depuration water to the side opening and favoring the extraction thereof.

### Brief Description of the Drawings

A set of drawings aiding to better understand the invention and relating specifically to an embodiment of said invention presented as a non-limiting example thereof will be described briefly below.
- Figure 1 is a perspective view of a plurality of containers stacked forming a column.
- Figure 2 is a perspective view of the upper part of the container of the present invention.
- Figure 3a is a plan view of the container of the present invention.
- Figure 3b is a sectioned view according to section line A-A of Figure 3a.
- Figure 3c is a sectioned view according to section line B-B of Figure 3a.
- Figure 3d is a sectioned view according to section line C-C of Figure 3a.
- Figure 4 is an elevational sectioned view of the container of the present invention in full operation.
- Figure 5 is a detailed view of a pin.

### Preferred Embodiment of the Invention

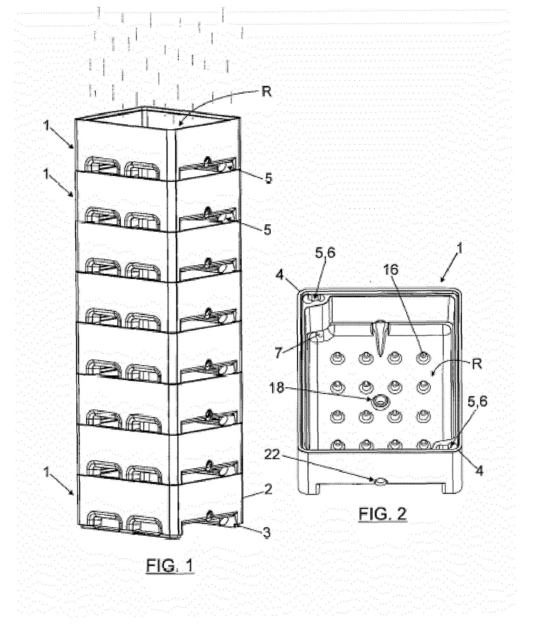

Figure 1 shows a perspective view of a plurality of stacked containers (1) forming a column, into the upper part of which depuration water is poured like a shower. Each container (1) comprises a base (3), a body (2) defining a receptacle (R) provided for housing the mollusks and evacuation means (5) configured for allowing the forced circulation of the depuration water from the bottom of the container (1) into the receptacle (R) of the container (1) immediately underneath. The body (2) is one piece and has smooth walls making it more durable, harder to break and easier to clean.
Figure 2 shows a perspective view of the upper part of the container of the present invention. The location of the evacuation means (5) which comprise at least two circulation lines (6) which are arranged in respective opposing corners (4) of the container (1) can be seen in greater detail therein.

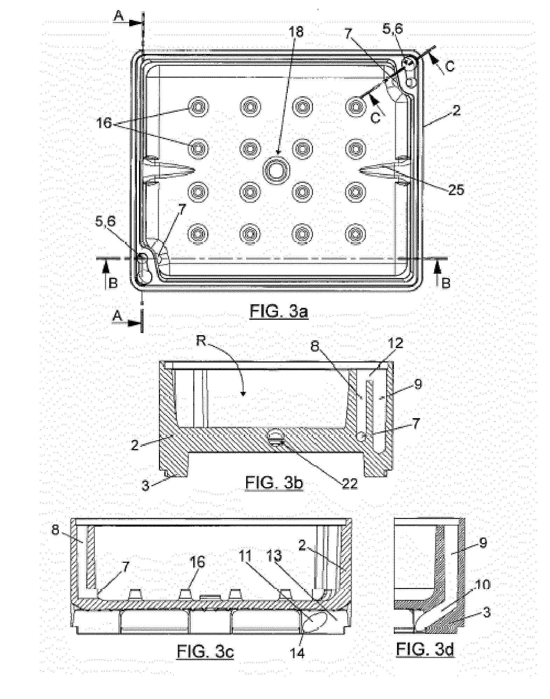

Figures 3a, 3b, 3c and 3d show in great detail the configuration of the circulation lines (6). Each of them specifically comprises:. a first section (8) with a collecting opening (7) arranged at the bottom of the container (1);. a second section (9) communicating with the first section (8), allowing a circulation of depuration water following an inverted U trajectory between both sections (8, 9); and . a third section (10) communicating with the second section (9), wherein said third section (10) is integrated in the base (3) of the container (1) and has a discharging opening (11) therein.

Wherein the third section (10) and the discharging opening (11) of each of the opposing circulation lines (6) are formed and oriented such that they allow a turbulent flow of the depuration water and a circulation thereof throughout the receptacle (R).

Likewise, the upper part of the first section (8) and of the second section (9) opens to the outside by means of a cavity (12) which allows ventilating the circulation line (6) and the cleaning thereof. This ventilation is also assured when the containers are stacked since the base (3) of the container (1) is configured for partially covering the cavity (12) of the container (1) immediately underneath. This also allows the depuration water to overflow the cavity (12) to go into the container (1) immediately underneath, provided that the level of the container (1) reaches the limit values caused by an excessive flow rate.

As mentioned above, the third section (10) and the discharging opening (11) of each of the opposing circulation lines (6) are formed and oriented such that they allow a turbulent flow of the depuration water and a circulation thereof throughout the receptacle (R). The way to achieve these results is by forming and orienting the third section (10) and the discharging opening (11) such that they have trajectories and shapes which allow the fast rotational movement of the depuration water in the receptacle (R). In the same sense, the discharging openings (11) of each of the opposing circulation lines (6) are arranged on an inner vertical surface (13) of the base (3) forming an elliptical contour (14) on said vertical surface (13) which allows driving the depuration water obliquely.

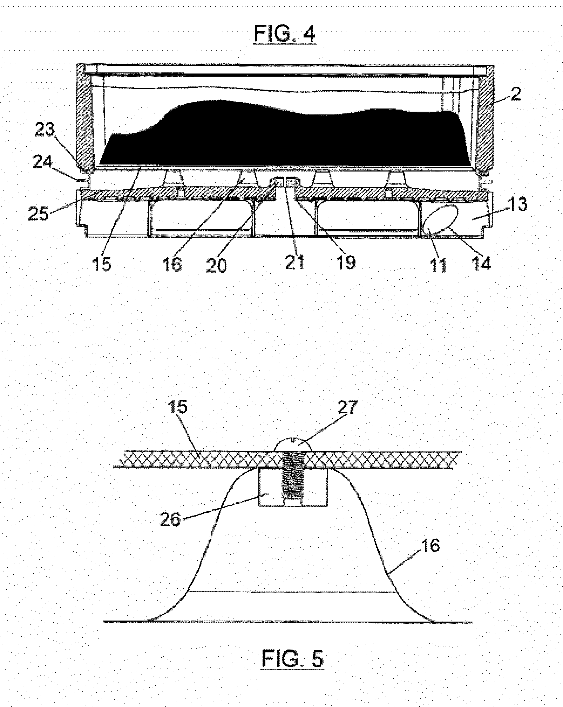

Figure 4 shows an elevational sectioned view of the container of the present invention in full operation. As can be seen the mollusk depuration container (1) additionally comprises a grating (15) close to the bottom of the container configured for holding the mollusks to be depurated. Said grating (15) is arranged on a plurality of pins (16) between which the sediments from the depuration are deposited. Figure 5 shows a detail of the pins (16) in which it can be seen that each of the pins (16) comprises an embedded nut (26), configured for receiving a screw (27) for fixing the grating (15) to the pin (16).

The container (1) for the depuration of mollusks of the present invention additionally comprises constant emptying means (18) allowing the continuous and regulated evacuation of the depuration water from the bottom of the container (1) into the receptacle (R) of the container (1) immediately underneath. The constant emptying means (18) comprise an aperture (19) arranged at the bottom of the container (1), configured for housing a sealing gasket (20) which in turn has a hole (21) the larger or smaller diameter of which allows regulating the flow of depuration water passing through same.

The depuration container (1) for the depuration of mollusks of the present invention additionally comprises intermittent emptying means (22) allowing the evacuation of the depuration water from inside the receptacle (R) to the outside thereof. The intermittent emptying means (22) comprise one or more side openings (23) configured for receiving leak-tight closure stoppers (24). Each of the side openings (23) preferably comprises a mouth (25) formed at the bottom of the receptacle (R) for channeling the depuration water to the side opening (23) and favoring the extraction thereof.

## Claims

1. A container for the depuration of mollusks, of the type of containers which are configured to be stacked forming a column of containers (1) into the upper part of which depuration water is poured like a shower, wherein each container (1) comprises a base (3), a body (2) defining a receptacle (R) provided for housing the mollusks and evacuation means (5) configured for allowing the forced circulation of the depuration water from the bottom of the container (1) into the receptacle (R) of the container (1) immediately underneath, said container (1) **characterized in that** the evacuation means (5) comprise at least two circulation lines (6) which are arranged in respective opposing corners (4) of the container (1), wherein each of the circulation lines (6) comprises:
• a first section (8) with a collecting opening (7) arranged at the bottom of the container (1);
• a second section (9) communicating with the first section (8), allowing a circulation of depuration water following an inverted U trajectory between both sections (8, 9); and
• a third section (10) communicating with the second section (9), wherein said third section (10) is integrated in the base (3) of the container (1) and has a discharging opening (11) therein, said discharging opening (11) being arranged on an inner vertical surface (13) of the base (3) forming an elliptical contour (14) on said vertical surface (13) which allows driving the depuration water obliquely;
wherein the third section (10) and the discharging opening (11) of each of the opposing circulation lines (6) have trajectories and shapes allowing the fast rotational movement of the depuration water in the receptacle (R) to allow a turbulent flow of the depuration water and a circulation thereof throughout the receptacle (R).

2. The container for the depuration of mollusks according to claim 1, **characterized in that** the upper part of the first section (8) and of the second section (9) opens to the outside by means of a cavity (12) which allows ventilating the circulation line (6) and the cleaning thereof.

3. The container for the depuration of mollusks according to claim 2, **characterized in that** the base (3) of the container (1) is configured for partially covering the cavity (12) of the container (1) immediately underneath for allowing the depuration water to overflow same.

4. The container for the depuration of mollusks according to any of claims 1 to 3, **characterized in that** it additionally comprises a grating (15) close to the bottom of the container configured for holding the mollusks to be depurated, wherein said grating (15) is arranged on a plurality of pins (16) between which the sediments from the depuration are deposited.

5. The container for the depuration of mollusks according to claim 4, **characterized in that** each of the pins (16) comprises an embedded nut (26) configured for receiving a screw (27) for fixing the grating (15) to the pin (16).

6. The container for the depuration of mollusks according to any of claims 1 to 5, **characterized in that** it additionally comprises constant emptying means (18) allowing the continuous and regulated evacuation of the depuration water from the bottom of the container (1) into the receptacle (R) of the container (1) immediately underneath.

7. The container for the depuration of mollusks according to claim 6, **characterized in that** the constant emptying means (18) comprise an aperture (19) arranged at the bottom of the container (1), configured for housing a sealing gasket (20) which in turn has a hole (21) the larger or smaller diameter of which allows regulating the flow of depuration water passing through same.

8. The container for the depuration of mollusks according to any of claims 1 to 7, **characterized in that** it additionally comprises intermittent emptying means (22) allowing the evacuation of the depuration water from inside the receptacle (R) to the outside thereof.

9. The container for the depuration of mollusks according to claim 8, **characterized in that** the intermittent emptying means (22) comprise one or more side openings (23) configured for receiving leak-tight closure stoppers (24).

10. The container for the depuration of mollusks according to claim 9, **characterized in that** each of the side openings (23) comprises a mouth (25) formed at the bottom of the receptacle (R) for channeling the depuration water to the side opening (23) and favoring the extraction thereof.

## Patentansprüche

1. Container zur Reinigung von Weichtieren, von der Art von Containern, welcher derart ausgebildet sind, um zu einer Containersäule (1) aufeinandergestapelt zu werden, in deren oberen Teil Reinigungswasser duschenartig eingefüllt wird, wobei jeder Container (1) einen Boden (3), einen Körper (2), welcher einen zur Aufnahme der Weichtiere vorgesehenen Behälter (R) bildet, und Abführmittel (5), die ausgebildet sind, um die Zwangszirkulation des Reinigungswassers von der Unterseite des Containers (1) in den Behälter (R) des Containers (1) hinein unmittelbar unter diesem zu ermöglichen, umfasst, wobei der genannte Container (1) **dadurch gekennzeichnet ist, dass** die Abführmittel (5) zumindest zwei Zirkulationsleitungen (6) umfassen, welche in jeweiligen gegenüberliegenden Ecken (4) des Containers (1) angeordnet sind, wobei jede der Zirkulationsleitungen (6) Folgendes umfasst:
• einen ersten Abschnitt (8) mit einer Sammelöffnung (7), welche an der Unterseite des Containers (1) angeordnet ist;
• einen zweiten Abschnitt (9), welcher mit dem ersten Abschnitt (8) verbunden ist, welcher eine Zirkulation von Reinigungswasser einem Verlauf in Form eines umgekehrten U's folgend zwischen beiden Abschnitten (8, 9) ermöglicht; und
• einen dritten Abschnitt (10), welcher mit dem zweiten Abschnitt (9) verbunden ist, wobei der genannte dritte Abschnitt (10) im Boden (3) des Containers (1) integriert ist und darin eine Auslassöffnung (11) aufweist, wobei die genannte Auslassöffnung (11) auf einer inneren vertikalen Fläche (13) des Bodens (3) unter Bildung eines elipsenförmigen Umrisses (14) auf der genannten vertikalen Fläche (13) angeordnet ist, welcher es ermöglicht, das Reinigungswasser schräg zu führen;
wobei der dritte Abschnitt (10) und die Auslassöffnung (11) jeder der gegenüberliegenden Zirkulationsleitungen (6) Verläufe und Formen aufweisen, welche eine schnelle Drehbewegung des Reinigungswassers im Behälter (R) ermöglichen, um eine turbulente Strömung des Reinigungswassers und ein Zirkulieren desselbigen durch den Behälter (R) zu ermöglichen.

2. Container zur Reinigung von Weichtieren nach Anspruch 1, **dadurch gekennzeichnet, dass** sich der obere Teil des ersten Abschnitts (8) und des zweiten Abschnitts (9) durch eine Kavität (12), welche ein Belüften der Zirkulationsleitung (6) und eine Reinigung derselbigen ermöglicht, nach Außen hin öffnet.

3. Container zur Reinigung von Weichtieren nach Anspruch 2, **dadurch gekennzeichnet, dass** der Boden (3) des Containers (1) derart ausgebildet ist, dass er die Kavität (12) des Containers (1), welcher sich direkt unter diesem befindet, teilweise abdeckt, um es dem Reinigungswasser zu ermöglichen, über diese hinweg zu fließen.

4. Container zur Reinigung von Weichtieren nach einem der Ansprüche 1 bis 3, **dadurch gekennzeichnet, dass** er zusätzlich ein Gitter (15) umfasst, welches nahe an der Unterseite des Containers liegt, welches derart ausgebildet ist, dass es die zu reinigenden Weichtiere hält, wobei das genannte Gitter (15) auf einer Vielzahl an Zapfen (16) angeordnet ist, zwischen welchen sich die Ablagerungen der Reinigung ablagern.

5. Container zur Reinigung von Weichtieren nach Anspruch 4, **dadurch gekennzeichnet, dass** jeder der Zapfen (16) eine eingelassene Mutter (26) umfasst, welche ausgebildet ist, um eine Schraube (27) zur Befestigung des Gitters (15) an dem Zapfen (16) aufzunehmen.

6. Container zur Reinigung von Weichtieren nach einem der Ansprüche 1 bis 5, **dadurch gekennzeichnet, dass** er zusätzlich Mittel zur konstanten Entleerung (18) umfasst, welche ein kontinuierliches und geregeltes Abführen des Reinigungswassers von der Unterseite des Containers (1) in den Behälter (R) des Containers (1) direkt unter diesem ermöglichen.

7. Container zur Reinigung von Weichtieren nach Anspruch 6, **dadurch gekennzeichnet, dass** die Mittel zur konstanten Entleerung (18) eine Öffnung (19) umfassen, welche an der Unterseite des Containers (1) angeordnet ist, welche derart ausgebildet ist, dass sie eine Dichtung (20) aufnimmt, welche ihrerseits ein Loch (21) aufweist, deren größerer oder kleinerer Durchmesser ein Regeln des Reinigungswasserflusses, welcher durch dieses fließt, ermöglicht.

8. Container zur Reinigung von Weichtieren nach einem der Ansprüche 1 bis 7, **dadurch gekennzeichnet, dass** er zusätzlich sporadische Entleerungsmittel (22) umfasst, welche ein Abführen des Reinigungswassers aus dem Inneren des Behälters (R) nach Außen ermöglichen.

9. Container zur Reinigung von Weichtieren nach Anspruch 8, **dadurch gekennzeichnet, dass** die sporadischen Entleerungsmittel (22) eine oder mehrere seitliche Öffnungen (23) umfassen, welche ausgebildet sind, um leckdichte Verschlussstopfen (24) aufzunehmen.

10. Container zur Reinigung von Weichtieren nach Anspruch 9, **dadurch gekennzeichnet, dass** jede der seitlichen Öffnungen (23) eine Mündung (25) umfasst, welche an der Unterseite des Behälters (R) gebildet ist, um das Reinigungswasser zu den seitlichen Öffnungen (23) zu kanalisieren und die Entnahme desselbigen zu begünstigen.

## Revendications

1. Un récipient pour le nettoyage de mollusques, du type de récipients qui sont configurés pour être empilés en formant une colonne de récipients (1) à l'intérieur de laquelle l'eau de nettoyage est versée sur la partie supérieure à la manière d'une douche, dans laquelle chaque récipient (1) comprend une base (3), un corps (2) définissant un réceptacle (R) prévu pour loger les mollusques et des moyens d'évacuation (5) configurés pour permettre la circulation forcée de l'eau de nettoyage depuis le fond du récipient (1) jusqu'au réceptacle (R) du récipient (1) directement en dessous, ledit récipient (1) **caractérisé en ce que** les moyens d'évacuation (5) comprennent au moins deux conduits de circulation (6) qui sont disposés aux angles (4) opposés respectifs du récipient (1), dans lequel chacun des conduits de circulation (6) comprend :
• une première section (8) avec un orifice de collecte (7) disposé au fond du récipient (1) ;
• une deuxième section (9) communiquant avec la première section (8), permettant une circulation de l'eau de nettoyage en suivant une trajectoire en U inversée entre les deux sections (8, 9) ; et
• une troisième section (10) communiquant avec la deuxième section (9), dans laquelle ladite troisième section (10) est intégrée à la base (3) du récipient (1) et a un orifice de déversement (11) dans celle-ci, ledit orifice de déversement (11) étant disposé sur une surface verticale interne (13) de la base (3) formant un contour elliptique (14) sur ladite surface verticale (13) qui permet de diriger obliquement l'eau de nettoyage ;
dans lequel la troisième section (10) et l'orifice de déversement (11) de chacun des conduits de circulation opposés (6) ont des trajectoires et des formes permettant le mouvement rotationnel rapide de l'eau de nettoyage dans le réceptacle (R) pour permettre un flux turbulent de l'eau de nettoyage et une circulation de celle-ci à travers le réceptacle (R).

2. Le récipient pour le nettoyage de mollusques selon la revendication 1, **caractérisé en ce que** la partie supérieure de la première section (8) et de la deuxième section (9) ouvre vers l'extérieur au moyen d'une cavité (12) qui permet de ventiler le conduit de circulation (6) et le nettoyage de celui-ci.

3. Le récipient pour le nettoyage de mollusques selon la revendication 2, **caractérisé en ce que** la base (3) du récipient (1) est configurée pour couvrir partiellement la cavité (12) du récipient (1) directement en dessous pour permettre à l'eau de nettoyage de déborder sur celle-ci.

4. Le récipient pour le nettoyage de mollusques selon l'une quelconque des revendications 1 à 3, **caractérisé en ce qu'**il comprend en outre une grille (15) à proximité du fond du récipient configuré pour retenir les mollusques à nettoyer, dans lequel ladite grille (15) est disposée sur une pluralité de tiges (16) entre lesquelles les sédiments du nettoyage sont déposés.

5. Le récipient pour le nettoyage de mollusques selon la revendication 4, **caractérisé en ce que** chacune des tiges (16) comprend un écrou embouti (26) configuré pour recevoir une vis (27) pour fixer la grille (15) à la tige (16).

6. Le récipient pour le nettoyage de mollusques selon l'une quelconque des revendications 1 à 5, **caractérisé en ce qu'**il comprend en outre des moyens de vidage constant (18) permettant l'évacuation continue et contrôlée de l'eau de nettoyage depuis le fond du récipient (1), jusqu'au réceptacle (R) du récipient (1) directement en dessous.

7. Le récipient pour le nettoyage de mollusques selon la revendication 6, **caractérisé en ce que** les moyens de vidage constant (18) comprennent une ouverture (19) disposée au fond du récipient (1), configurée pour loger un joint d'étanchéité (20) qui à son tour a une perforation (21) dont le plus grand ou le plus petit diamètre permet de contrôler le flux de l'eau de nettoyage passant à travers celle-ci.

8. Le récipient pour le nettoyage de mollusques selon l'une quelconque des revendications 1 à 7, **caractérisé en ce qu'**il comprend en outre des moyens de vidage intermittent (22) permettant l'évacuation de l'eau de nettoyage depuis l'intérieur du réceptacle (R) jusqu'à l'extérieur de celui-ci.

9. Le récipient pour le nettoyage de mollusques selon la revendication 8, **caractérisé en ce que** les moyens de vidage intermittent (22) comprennent un ou plusieurs orifices latéraux (23) configurés pour recevoir des bouchons de fermeture étanches (24).

10. Le récipient pour le nettoyage de mollusques selon la revendication 9, **caractérisé en ce que** chacun des orifices latéraux (23) comprend une embouchure (25) formée au fond du réceptacle (R) pour canaliser l'eau de nettoyage vers l'orifice latéral (23) et favoriser l'extraction de celle-ci.
